Europäisches Patentamt

(19) European Patent Office

Office européen des brevets

(11) Veröffentlichungsnummer: **0 091 394**
**B1**

(12) **EUROPÄISCHE PATENTSCHRIFT**

(45) Veröffentlichungstag der Patentschrift:
27.08.86

(51) Int. Cl.⁴: **G 01 D 5/26,** G 01 L 1/24,
**G 01 K 11/20**

(21) Anmeldenummer: **83710012.2**

(22) Anmeldetag: **22.03.83**

(54) **Faseroptische Messanordnung zum Messen physikalischer Grössen.**

(30) Priorität: **01.04.82 SE 8202093**

(43) Veröffentlichungstag der Anmeldung:
**12.10.83 Patentblatt 83/41**

(45) Bekanntmachung des Hinweises auf die Patenterteilung:
**27.08.86 Patentblatt 86/35**

(84) Benannte Vertragsstaaten:
**CH DE FR GB LI**

(56) Entgegenhaltungen:
**DE - A - 2 755 713**
**DE - A - 3 036 682**
**DE - A - 3 101 047**
**DE - A - 3 122 788**
**GB - A - 2 034 460**
**US - A - 4 223 226**

(73) Patentinhaber: **ASEA AB, S-721 83 Västeras (SE)**

(72) Erfinder: **Brogardh, Torgny, Prof., Platverksgatan 140,
S-724 74 Västeras (SE)**
Erfinder: **Hök, Bertil, Dr.-phil., Sportfiskargatan 53,
S-723 48 Västeras (SE)**
Erfinder: **Ovrén, Christer, Dr.-Ing., Vilddjursvägen 9,
S-722 43 Västeras (SE)**

(74) Vertreter: **Boecker, Joachim, Dr.-Ing.,
Rathenauplatz 2-8, D-6000 Frankfurt a.M. 1 (DE)**

## Beschreibung

Die vorliegende Erfindung betrifft eine faseroptische Messanordnung zum Messen physikalischer Grössen gemäss dem Oberbegriff des Anspruches 1. Eine solche Messanordnung ist im wesentlichen bekannt aus der US-A 4 223 226.

Faseroptische Messanordnungen mit Verwendung von lumineszenzfähigem Material im Sensor ermöglichen in einzigartiger Weise eine Signalübertragung in beiden Richtungen über ein und dieselbe optische Faser zwischen der Messstelle (Sensor) und dem Elektronikteil (Sender und Empfänger). Die meisten bekannten Messanordnungen dieser Art nutzen die Wellenlängenaufteilung der Signalinformation aus, und zwar mit Hilfe optischer Filter oder spezialgefertigter optischer Bauteile entweder im Senderteil (Leucht- und Laserdioden) oder im Empfängerteil (Fotodioden). Dadurch werden der Preis und das Leistungsvermögen der Messanordnung von der Präzision und der Qualität dieser Bauteile abhängig. Diese Messanordnungen haben einen komplizierten mechanisch-optischen Aufbau des Senderteils und des Empfängerteils, und häufig sind Spezialanfertigungen von optischen Bauteilen für verschiedene Anwendungszwecke erforderlich. Entsprechendes wie für die Wellenlängenaufteilung der Signalinformation (Frequenzmultiplex-Anordnung) gilt für die zeitliche Aufteilung der Signalinformation (Zeitmultiplex-Anordnung). Eine Zeit- oder Frequenzaufteilung der Information bedeutet, dass die an die Genauigkeit gestellten Forderungen von den optischen und den elektronischen Bauteilen erfüllt werden müssen.

Aus der US-A 4 223 226 ist es bekannt, Temperaturmessanordnungen mit faseroptischen Temperatursensoren auszurüsten. Die Messanordnung besteht aus einem Elektronikteil, der einen Sender und einen Empfänger umfasst, und einem Sensor, die über zwei optische Fasern miteinander verbunden sind. Im Sensorteil befindet sich fotolumineszierendes Material. Der Temperaturmesswert wird gewonnen durch Erfassung der Amplitudenabklingkurve des auf Lumineszenz beruhenden Lichtsignals. Als lumineszierendes Material werden besondere Phosphore verwendet, die sowohl längere als auch kürzere Abklingzeiten und Ansprechzeiten als die üblichen Phosphore haben. Ein Nachteil dieser bekannten Messanordnung besteht in Schwierigkeiten bei der Reproduzierbarkeit und Stabilisierung der Messwertgewinnung.

Aus der DE-A 3 101 047 sind faseroptische Messgeräte bekannt, bei denen der Sensor aus zwei Materialien mit unterschiedlichen Lumineszenzeigenschaften aufgebaut ist, wobei eines der beiden Materialien einer zu messenden Kraft beziehungsweise einem Druck ausgesetzt ist. Ferner ist es aus dieser Druckschrift bekannt, durch Quotientenbildung eines gewonnenen Lumineszenzsignals und des Lichtsignals von der anregenden Leuchtdiode Übertragungsfehler zu kompensieren.

Der Erfindung liegt die Aufgabe zugrunde, eine Messanordnung der eingangs genannten Art zu entwickeln, bei der hohe Genauigkeiten unter Verwendung elektronischer Standardbauteile erzielbar sind, die aus billiger Massenproduktion stammen können.

Zur Lösung dieser Aufgabe wird eine faseroptische Messanordnung vorgeschlagen, welche die im Anspruch 1 genannten Merkmale hat.

Vorteilhafte Weiterbildungen der Erfindung sind in den folgenden Ansprüchen genannt.

Die Erfindung beruht auf der Verwendung von mindestens zwei lumineszierenden Materialien, deren Lumineszenzlichterzeugung durch unterschiedliche Zeitkonstanten gekennzeichnet ist, so dass das Lumineszenzlicht der mindestens zwei lumineszierenden Materialien mit unterschiedlichen Zeitverläufen (Zeitkonstanten) abklingt. Die Erfindung nutzt also die zeitlich und hinsichtlich ihres Abklingverlaufes aufgeteilte Signalfunktion aus. Die vom Sensor abgegebene stationäre Lumineszenzlichtintensität, die der Lumineszenz bei mindestens einer Zeitkonstante entspricht, ist ein Mass für die zu messende Messgrösse. Bei der ausgenutzten Eigenschaft handelt es sich um die sogenannte optische Zeitkonstante des Sensormaterials. Wenn das Material durch einen Lichtimpuls zur Lumineszenz angeregt wird, so klingt das Lumineszenzlicht nach dem Verschwinden des Impulses nach folgender Zeitfunktion ab:

$$I(t) = I_0 \, e^{-\frac{t}{\tau}} \tag{1}$$

wobei $\tau$ die optische Zeitkonstante des Materials und $I_0$ die Lumineszenzlichtintensität unmittelbar nach dem Verschwinden des Anregungslichtes ist. Oft erhält man keinen exakt exponentiellen Verlauf, sondern der Abklingverlauf setzt sich aus der Überlagerung von mehreren Exponentialfunktionen zusammen, die durch unterschiedliche Zeitkonstanten $\tau_i$ beschrieben werden, nach der Gleichung:

$$I(t) = \sum_{i=1}^{n} I_i \, e^{-\frac{t}{\tau_i}} \tag{2}$$

Als Beispiel für Materialkombinationen mit den vorstehenden Eigenschaften können Ionen von Metallen der seltenen Erden genannt werden, wie z.B. Neodym, die in Form einer festen Lösung in einem Trägermaterial vorhanden sind, wie z.B. Glas in verschiedenen Zusammensetzungen oder kristalline Substanzen, wie Yttrium-Aluminium-Granat (YAG). Die Werte der Zeitkonstanten können durch die Wahl von Metallionen und Trägermaterial geändert werden. Thornton und andere [Appl. Opt. 8 (1969) 1087–1102] haben gemessene Werte für viele Materialkombinationen publiziert. Nd:YAG ergibt $\tau = 240 \, \mu s$, während Nd in verschiedenen Glasqualitäten Zeitkonstanten bewirken kann, die zwischen 50 und 700 $\mu s$ liegen. Die Werte sind bemerkenswert temperaturstabil mit Temperaturkoeffizienten von ca. 200 bis 500 ppm/°C in dem Temperaturbereich von 0 bis 200°C.

Eine hohe Grössenordnung der Werte der Zeitkonstanten ist im Hinblick auf die Signalerfassung günstig, da keine Rücksicht auf Laufzeiteffekte in der Faser mit einer Abklingzeit von einigen $\mu$s genommen zu werden braucht.

Der Wirkungsgrad der Lumineszenz ist gemäss Thornton 60 bis 90% für Nd-Ionen in Glas und YAG bei Anregungslicht mit einer Wellenlänge von ca. 750 nm mit einer Temperaturabhängigkeit von weniger als 500 ppm/°C in dem Temperaturbereich von 0 bis 200°C.

Bisher ist dieses Material als das optisch aktive Medium in Hochleistungslasern verwendet worden und ist bei mehreren Glasherstellern kommerziell zugänglich. Es kann nach glastechnisch üblichen Methoden geformt und bearbeitet werden.

Eine andere Art von Material sind Halbleiter, bei welchen die Lumineszenz durch Band-zu-Band-Rekombination von Ladungsträgern erzeugt wird oder durch Generations- und Rekombinationsverläufern über Störzentren, die z.B. von Dotierungsstoffen herrühren. Als Beispiel für solches Material kann GaAs mit Ge als Dotierungsstoff genannt werden, das mit Dotierungskonzentrationen von $10^{16}$ bis $10^{18}$ Atomen pro $cm^3$ eine Modulation der Zeitkonstante der Lumineszenz von 1 $\mu$s bis zu ca. 10 $\mu$s ergeben kann. Längere Zeitkonstanten kann man in Halbleitermaterial mit indirekten Bandabständen erreichen, wobei die gesamte Lumineszenz von Störzentren stammt.

Es ist natürlich auch möglich, Material der vorgenannten beiden Arten in vielfacher Weise zu kombinieren.

Anhand der in den Figuren gezeigten Ausführungsbeispiele und Diagramme soll die Erfindung näher erläutert werden. Es zeigen:

Fig. 1 ein Ausführungsbeispiel für eine Messanordnung gemäss der Erfindung,

Fig. 2 die von der Erfindung ausgenutzten zeitlichen Verläufe bestimmter Grössen,

Fig. 3 ein Ausführungsbeispiel für den Sensor einer Anordnung gemäss der Erfindung, welcher eine Lageänderung erfasst,

Fig. 4 ein Ausführungsbeispiel für einen Sensor zur Messung von magnetischen Feldern,

Fig. 5 ein Ausführungsbeispiel für den Aufbau eines Sensors als Lagegeber.

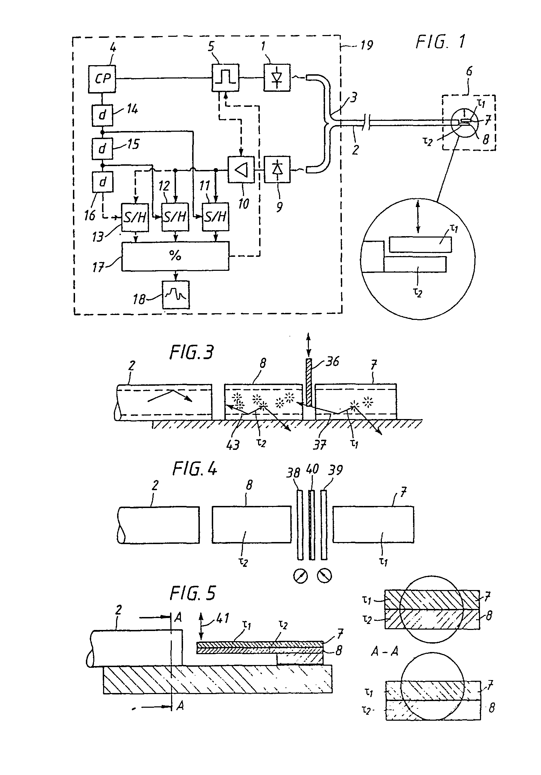

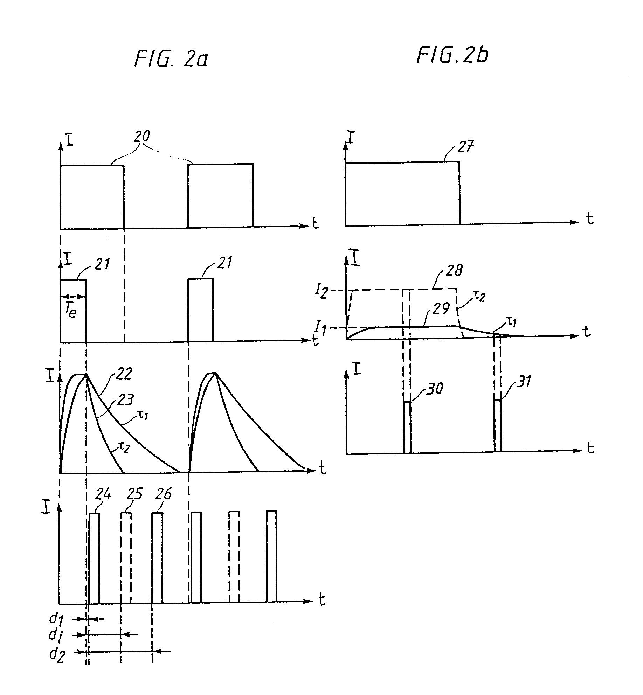

Die Arbeitsweise der Messanordnung gemäss der Erfindung geht aus den Figuren 1 und 2 hervor. Eine Leuchtdiode 1 speist über die optische Faserverzweigung Licht in die optische Faser 2 ein, welche den Sensor 6 mit dem Elektronikteil 19 der Messanordnung verbindet. Das ausgesendete Licht der Leuchtdiode 1 hat Impulsform, was durch einen speisenden Impulsgenerator 4 und einen nachgeschalteten Impulsformer 5 erreicht wird. Der Sensor 6 enthält lumineszierende Materialien mit mindestens zwei optischen Zeitkonstanten $\tau_1$ und $\tau_2$. In dem gezeigten Ausführungsbeispiel sind diese Materialien mit den betreffenden Zeitkonstanten in räumlich getrennten Körpern 7, 8 enthalten. Der Materialkörper 8 mit der Zeitkonstante $\tau_1$ ist fest mit dem Faserende verbunden, während der Materialkörper 7 mit der Zeitkonstante $\tau_2$ beweglich angeordnet ist, wobei seine Lage, die von der Messgrösse bestimmt wird, gemessen werden soll. Diese Messgrösse kann beispielsweise die Lage eines anderen Körpers, eine Kraft, eine Beschleunigung, ein hydrostatischer Druck, ein Flüssigkeitsniveau oder ein Fluss sein. Durch Lageveränderungen zwischen den Körpern 7 und 8 variiert das in den Körper 8 einfallende, von der Leuchtdiode 1 kommende Anregungslicht, das wiederum eine Variation der Intensität der Lumineszenz mit der Zeitkonstante $\tau_2$ bewirkt.

In dem Fotodetektor 9 (z.B. eine Fotodiode) und dem Detektorverstärker 10 wird das vom Sensor in die Faser 2 gestrahlte Licht (optische Signal) in eine elektrische Spannung umgewandelt. Der Verstärker 10 kann dabei während der Dauer des Anregungsimpulses durch ein Steuersignal von dem Impulsformer 5 blockiert werden, um zu verhindern, dass Licht von der Leuchtdiode 1, welches infolge von Reflexionen zum Fotodetektor 9 gelangt, das Messsignal verfälscht. Alternativ kann dieses reflektierte Licht durch ein optisches Filter vor dem Detektor 9 abgefangen werden. Optische Bandpass-Interferenzfilter für die Wellenlänge des Lumineszenzlichtes der Nd-Ionen (1,06 $\mu$m) sind im Handel erhältlich.

Das Ausgangssignal des Detektorverstärkers 10 wird zeitlich in mehreren S/H-Gliedern («sample and hold»-Glieder) 11, 12, 13 aufgeteilt, die synchron von dem Impulsgenerator 4 über die Verzögerungsglieder 14, 15, 16 gesteuert werden. Das zeitaufgeteilte Signal wird einem Berechnungsglied 17 zugeführt, welches ein Signal, das die Messgrösse repräsentiert, auswirft, das in dem Anzeigeglied 18 angezeigt wird. Ein S/H-Glied ist ein solches, welches den einmal an seinem Eingang vorhanden gewesenen Wert speichert und als Ausgangsgrösse abgibt. Wenn ein neuer Steuerimpuls kommt, so wird der bisher gespeicherte Wert durch den neuen am Eingang anstehenden Wert ersetzt.

Fig. 2 zeigt den zeitlichen Verlauf von Signalen, die in der Messordnung auftreten. Das Ausgangssignal 20 des Impulsgenerators 4 steuert den zeitlichen Ablauf. Das Ausgangssignal des Impulsformers 5 kann entweder aus einer Impulsfolge von Impulsen fester Länge $T_e$ bestehen oder von dem Berechnungsglied 17 so gesteuert werden, dass sich eine optimale Anregung ergibt. Die Kurven 22 und 23 zeigen den mit den Zeitkonstanten $\tau_1$ bzw. $\tau_2$ abklingenden Verlauf des Lumineszenzlichtes. Die Impulse 24, 25, 26 zeigen drei Zeitfenster zur Eingabe von Signalen in die S/H-Glieder 11, 12, 13. Durch den Impuls 24, der auf die kürzeste Verzögerungszeit $d_1$ nach dem Ende des Anregungsimpulses 21 eingestellt ist, wird im wesentlichen die gesamte Lumineszenzintensität unabhängig von den Werten der Zeit-

konstanten erfasst, d.h.

$$I(d_1) \approx I(0) \approx I_1 e^{-\frac{0}{\tau_1}} + I_2 e^{-\frac{0}{\tau_2}} = I_1 + I_2$$

Wenn $\tau_1 \gg \tau_2$, kann der nächste Erfassungsvorgang, der von dem Impuls 26 repräsentiert wird, zu einem Zeitpunkt $d_2 \gg \tau_2$ durchgeführt werden, so dass die erfasste Intensität dann im wesentlichen von dem Lumineszenzlicht, das mit der Zeitkonstanten $\tau_2$ abklingt, unabhängig ist:

$$I(d_2) = I_1 e^{-\frac{d_2}{\tau_1}}$$

Wenn $\tau_1$ und $d_2$ bekannt sind, kann $I_1$ und damit der informationstragende Quotient $I_1/I_2$ berechnet werden.

In dem beschriebenen Fall mit zwei einfachen, deutlich auseinanderliegenden Zeitkonstanten $\tau_1$ und $\tau_2$ wird das Berechnungsglied somit verhältnismässig einfach und kann sogar aus analogen Schaltkreisen ausgebaut sein. In komplizierteren Fällen, bei denen man auf einen multiexponentiellen Verlauf entsprechend der Gleichung (2) Rücksicht nehmen muss, müssen dem Zeitdiagramm mehrere Messpunkte hinzugefügt werden (Impuls 25 zum Zeitpunkt $d_i$). Das Berechnungsglied 17 muss in diesem allgemeineren Fall ein Gleichungssystem mit einer grösseren Anzahl von Unbekannten lösen, die von der Anzahl überlagerter Exponentialverläufe bestimmt wird, was natürlich auch die Anzahl der erforderlichen Messpunkte im Zeitdiagramm bestimmt. Wenn die Anzahl Messpunkte im Abklingverlauf die Anzahl der Zeitkonstanten übersteigt, wird das Gleichungssystem überbestimmt. Dies kann dazu benutzt werden, um andere Informationen zuzuführen. Wenn beispielsweise die Zeitkonstante temperaturabhängig ist, kann die Berechnung ihres Wertes eine gleichzeitige Temperaturmessung ergeben.

Fig. 2b zeigt ein Zeitdiagramm für einen Sensoraufbau, bei welchem das Lumineszenzlicht $I_2$ (Kurve 28) des stationären Körpers 8 mit der Zeitkonstante $\tau_2$ abklingt, die wesentlich kürzer als $\tau_1$ ist, während das Lumineszenzlicht $I_1$ (Kurve 29) des Körpers 7, das mit der Zeitkonstante $\tau_1$ abklingt, viel schwächer ist als $I_2$. Durch Anregung mit einem langen Impuls 27 und einer ersten Messung 30 während der stationären Phase und einer zweiten Messung 31 während des Abklingvorganges zu einer Zeit, zu der das Licht $I_2$ bereits voll abgeklungen ist, können beide Komponenten getrennt werden.

Eine alternative Ausführung des Detektorsystems besteht darin, dass die Analyse in der Frequenzebene vorgenommen wird, beispielsweise mit einer analogen Anordnung.

Fig. 3 zeigt eine Ausführungsform eines Lagesensors, bei der die lumineszierenden Materialien 7 und 8 längs der Ausbreitungsrichtung (der Hauptrichtung der Faser) des Lichtes angeordnet sind. Das Material 8 mit der optischen Zeitkonstante $\tau_2$ ist wie ein Wellenleiter mit totalreflektierenden Zwischenflächen 43 ausgebildet. Die Absorption von einfallendem Licht durch das Material 8 ist so gewählt, dass auch eine Anregung des Materials 7 mit der Zeitkonstante $\tau_1$, stattfindet. Die Modulation des Anregungslichtes zu und des Lumineszenzlichtes von dem Material 7 geschieht in diesem Fall mit Hilfe eines beweglichen Schirms 36, dessen Bewegung ein Mass für die Messgrösse ist. Das Material 7 kann vorzugsweise ebenfalls als ein Wellenleiter mit totalreflektierenden Zwischenflächen 37 ausgebildet sein. Der Schirm 36 kann auch aus einem selektiv absorbierenden Material oder einem in geeigneter Weise angeordneten Spiegel bestehen.

Fig. 4 zeigt einen Sensor zur Magnetfeldmessung, der völlig ohne bewegliche Teile auskommt. Ausser den lumineszierenden Materialien 7 und 8 enthält der Sensor zwei polarisierende Platten 38, 39, deren Polarisationsebenen um 90° gegeneinander gedreht sind. Dazwischen liegt ein Material 49, dessen polarisationsdrehenden Eigenschaften von der Grösse des zu messenden Magnetfeldes abhängen. Bei dem Material kann' es sich um ein Bereichsmaterial handeln, wie beispielsweise Yttrium-Eisen-Granat. Zur Messung einer elektrischen Feldstärke oder einer mechanischen Verformung kann das Material 40 durch elektrooptisch oder elastooptisch empfindliches Material ersetzt werden. Da die magnetooptischen, elektrooptischen bzw. elastooptischen Eigenschaften dieser Materialien oft temparaturabhängig sind, möchte man manchmal auch die Temperatur des Gebers messen können. Dies kann auf einfache Weise dadurch geschehen, dass man ein lumineszierendes Material mit einer temperaturabhängigen Zeitkonstante wählt und diese misst.

Fig. 5 zeigt einen Lagesensor, bei dem die lumineszierenden Materialien 7 und 8 zu einer einfachen Balkenstruktur fest zusammengefügt, z.B. zusammengeschmolzen, sind, und nach Art eines einseitig eingespannten Balkens angeordnet sind. Dieser wird senkrecht zur Längsrichtung der Faser 2 durch Aufbringung einer Kraft 41 elastisch verformt (gebogen). In diesem Fall wird das Lumineszenzlicht der beiden Materialien 7 und 8, zu denen die optischen Zeitkonstanten $\tau_1$ bzw. $\tau_2$ gehören, in Abhängigkeit der Durchbiegung des genannten Balkens moduliert. Dies wird in den beiden Schnittdarstellungen A–A in Fig. 5 illustriert. Beim Herunterbiegen des Balkens wird der Anteil der von der Faser 2 überdeckten Fläche für das Material 7 grösser und für das Material 8 kleiner. Dadurch erhält man eine Änderung des Intensitätsquotienten aus den beiden Lumineszenzlichtanteilen.

**Patentansprüche**

1. Faseroptische Messanordnung zum Messen physikalischer Grössen, wie zum Beispiel einer Kraft, eines Druckes, eines Niveaus, eines Flusses, einer Beschleunigung, einer Verformung, einer magnetischen oder elektrischen Feldstärke, einer Temperatur usw., die aus einem Sender und Empfänger umfassenden Elektronikteil (19) und einem Sensor (6) besteht, die über mindestens eine optische Faser (2) miteinander verbunden sind, wobei im Sensor lumineszenzfähige Materialien vorhanden sind, wobei der Abklingverlauf des auf Lumineszenz beruhenden Lichtsignals mit einem Detektor gemessen wird und wobei dieser Messwert als Mass für die zu messende physikalische Grösse verwertet wird, dadurch gekennzeichnet, dass der Sensor (6) Materialien zur Erzeugung von Lumineszenzlicht mit mindestens zwei verschiedenen den Abklingverlauf bestimmenden Zeitkonstanten ($\tau_1$ und $\tau_2$) enthält und dass der Quotient aus den erzeugten Lumineszenzlichtanteilen ($I_1$ und $I_2$), für die verschiedenen Zeitkonstanten ($\tau_1$ und $\tau_2$) gelten, als ein Mass für die Messgrösse gebildet wird.

2. Faseroptische Messanordnung nach Anspruch 1, dadurch gekennzeichnet, dass das Lumineszenzlicht von mindestens einem festen Körper (7, 8) herrührt.

3. Faseroptische Messanordnung nach Anspruch 2, dadurch gekennzeichnet, dass der feste Körper (7, 8) Metallionen enthält.

4. Faseroptische Messanordnung nach Anspruch 3, dadurch gekennzeichnet, dass die Metallionen als eine feste Lösung in einem amorphen oder kristallinen Trägermaterial enthalten sind.

5. Faseroptische Messanordnung nach Anspruch 3, dadurch gekennzeichnet, dass es sich bei den Metallionen um Metalle der seltenen Erden, wie z.B. Neodymionen, handelt.

6. Faseroptische Messanordnung nach Anspruch 2, dadurch gekennzeichnet, dass der feste Körper (7, 8) mindestens ein lumineszierendes Halbleitermaterial, wie z.B. Galliumarsenid, enthält.

7. Faseroptische Messanordnung nach Anspruch 6, dadurch gekennzeichnet, dass das Halbleitermaterial mindestens einen Dotierungsstoff, wie z.B. Germanium, enthält.

8. Faseroptische Messanordnung nach Anspruch 4, dadurch gekennzeichnet, dass das Trägermaterial im wesentlichen lichttransparent, z.B. Glas, ist.

9. Faseroptische Messanordnung nach Anspruch 3, dadurch gekennzeichnet, dass die mindestens zwei Zeitkonstanten von der Wahl unterschiedlicher Metallionen für Lumineszenz herrühren.

10. Faseroptische Messanordnung nach Anspruch 3, dadurch gekennzeichnet, dass die mindestens zwei Zeitkonstanten von der Wahl des Trägermaterials herrühren.

11. Faseroptische Messanordnung nach einem der vorhergehenden Ansprüche, dadurch gekennzeichnet, dass eine Lichtquelle (1) zeitlich variierende optische Energie abgibt.

12. Faseroptische Messanordnung nach Anspruch 10, dadurch gekennzeichnet, dass die von der Lichtquelle (1) ausgehende optische Energie impulsförmig ist oder mindestens sinusförmig ist.

13. Faseroptische Messanordnung nach einem der vorhergehenden Ansprüche, dadurch gekennzeichnet, dass mindestens ein Lumineszenzlichtanteil durch Abschirmung, Reflexion, Polarisation oder Interferenz von der physikalischen Messgrösse modulierbar ist.

14. Faseroptische Messanordnung nach einem der vorhergehenden Ansprüche, dadurch gekennzeichnet, dass der lumineszierende Körper (7, 8) die Form eines flachen oder zylindrischen optischen Wellenleiters hat.

15. Faseroptische Messanordnung nach Anspruch 12, dadurch gekennzeichnet, dass im Elektronikteil (19) Glieder vorhanden sind, welche das im Sensor (6) erzeugte Lumineszenzlicht ($I_1 \cdot e^{-t/\tau_1} + I_2 \cdot e^{-t/\tau_2}$) zu verschiedenen Zeitpunkten, gerechnet vom Verschwinden des Anregungslichtes, messen.

16. Faseroptische Messanordnung nach Anspruch 15, dadurch gekennzeichnet, dass das genannte Lumineszenzlicht zu zwei verschiedenen Zeitpunkten gemessen wird und dass der Quotient aus den beiden so gewonnenen Detektorsignalen $S_d(t_1)$ und $S_d(t_2)$ nach der Formel

$$\frac{S_d(t_2) \cdot C}{S_d(t_1) - S_d(t_2) \cdot C}$$

gebildet wird, wobei C eine Konstante ist.

17. Faseroptische Messanordnung nach Anspruch 15, dadurch gekennzeichnet, dass das vom Sensor erzeugte Lumineszenzlicht

$$\sum_{i=1}^{n} I_1 e^{-\frac{t}{\tau_1}}$$

zu einer Anzahl von Zeitpunkten gemessen wird, die grösser ist als die Anzahl der Zeitkonstanten (n), mit denen die einzelnen Lumineszenzlichtanteile abklingen.

## Claims

1. Fibre-optical device for measuring physical quantities, such as a force, a pressure, a level, a flow, an acceleration, a deformation, a magnetic or electric field strength, a temperature etc., consisting of an electronic unit (19), comprising an emitter and a receiver, and a sensor (6), said unit (19) and said sensor (6) being linked via at least one optical fibre (2), whereby the sensor is provided with materials capable of generating luminescent light, the decay curve of the light signals generated by luminescence are measured by a detector, and this measuring value is processed as a measure of the physical quantity to be measured, characterized in that the sensor (6) is provided with materials for the generation of luminescent light with at least two different time constants ($\tau_1$ and $\tau_2$) determining said decay curve, and that the quotient of the generated luminescent light portions ($I_1$ and $I_2$) which are associated to the two different time constants ($\tau_1$ and $\tau_2$) is formed as a measure for the measuring quantity.

2. Fibre-optical device according to claim 1, characterized in that the luminescent light emanates from at least one solid body (7, 8).

3. Fibre-optical device according to claim 2, characterized in that said solid body (7, 8) contains metallic ions.

4. Fibre-optical device according to claim 3, characterized in that the metallic ions are included as a solid solution in an amorphous or crystalline bonding material.

5. Fibre-optical device according to claim 3, characterized in that the metallic ions consist of rare earth metals such as neodymium.

6. Fibre-optical device according to claim 2, characterized in that the solid body (7, 8) includes at least one luminescent semiconductor material, such as gallium arsenide.

7. Fibre-optical device according to claim 6, characterized in that the semiconductor material contains at least one doping substance, such as germanium.

8. Fibre-optical device according to claim 4, characterized in that the bonding material is substantially light transparent as for example glass.

9. Fibre-optical device according to claim 3, characterized in that said at least two time constants are determined by selecting different metallic ions for the generation of luminescent light.

10. Fibre-optical device according to claim 3, characterized in that said at least two time constants are determined by the selection of the bonding material.

11. Fibre-optical device according to any of the preceding claims, characterized in that a light source (1) emits time-varying optical energy.

12. Fibre-optical device according to claim 10, characterized in that the optical energy emanating from the light source (1) has the shape of discrete pulses or at least of a sinusoidal curve.

13. Fibre-optical device according to any of the preceding claims, characterized in that at least a portion of the luminescent light can be modulated by the physical quantity to be measured by means of screening, reflection, polarization, or interference.

14. Fibre-optical device according to any of the preceding claims, characterised in that the luminescent body (7, 8) has the shape of a flat or cylindrical optical wave conductor.

15. Fibre-optical device according to claim 12, characterized in that the electronic unit (19) includes components which measure the luminescent light $(I_1 \cdot e^{-t/\tau_1} + I_2 \cdot e^{-t/\tau_2})$ generated in the sensor (6) at different points in time counted from the disappearance of the exciting light.

16. Fibre-optical device according to claim 15, characterized in that said luminescent light is measured at two different points in time and that the quotient of the two different detector signals $S_d(t_1)$ and $S_d(t_2)$ obtained thereby is formed according the expression

$$\frac{S_d(t_2) \cdot C}{S_d(t_1) - S_d(t_2) \cdot C}$$

whereby C is a constant.

17. Fibre-optical device according to claim 15, characterized in that the luminescent light

$$\sum_{i=1}^{n} I_1 e^{-\frac{t}{\tau_1}}$$

generated by the sensor is measured at a number of points in time which number is greater than the number of time constants (n) which determine the decay curve for the individual luminescent light portions.

**Revendications**

1. Dispositif de mesure à fibres optiques pour mesurer des grandeurs physiques commes par exemple, une force, une pression, un niveau, un flux, une accélération, une déformation, une intensité de champ magnétique ou électrique, une température, etc..., composé d'une partie électronique (19) comprenant un émetteur et un récepteur et d'un capteur (6) réliés entre eux par au moins une fibre optique 2, des matériaux luminescents étant présents dans le capteur, la durée d'extinction du signal de lumière qui dépend de la luminescence étant mesurée par un détecteur et cette valeur de mesure étant utilisée comme mesure pour la grandeur physique à mesurer, caractérisé en ce que le capteur contient des matériaux pour la production de la lumière luminescente avec au moins deux constantes de temps différentes $(\tau_1$ et $\tau_2)$ déterminant la durée de l'extinction et en ce que le quotient entre les parts de lumière luminescente produites $(I_1$ et $I_2)$ , associées aux différentes constantes de temps $(\tau_1$ et $\tau_2)$, est formé en tant que mesure de la grandeur de mesure.

2. Dispositif de mesure à fibres optiques selon la revendication 1, caractérisé en ce que la lumière luminescente provient au moins d'un corps fixe (7, 8).

3. Dispositif de mesure à fibres optiques selon la revendication 2, caractérisé en ce que le corps fixe (7, 8) contient des ions métalliques.

4. Dispositif de mesure à fibres optiques selon la revendication 3, caractérisé en ce que les ions métalliques sont contenus en tant que solution solide dans un matériau de support amorphe ou cristallin.

5. Dispositif de mesure selon la revendication 3, caractérisé en ce que les ions métalliques sont constitués à partir de métaux de terres rares comme par exemple les ions de néodyme.

6. Dispositif de mesure selon la revendication 2, caractérisé en ce que le corps fixe (7, 8) comprend au moins un matériau semi-conducteur luminescent comme par exemple un arseniure de gallium.

7. Dispositif de mesure à fibres optiques selon la revendication 6, caractérisé en ce que le matériau semi-conducteur comprend au moins un élément de dopage, comme par exemple du germanium.

8. Dispositif de mesure à fibres optiques selon la revendication 4, caractérisé en ce que le matériau de support est en substance transparente à la lumière comme par exemple du verre.

9. Dispositif de mesure à fibres optiques selon la revendication 3, caractérisé en ce qu'au moins les deux constantes de temps proviennent du choix d'ions métalliques différents pour la luminescence.

10. Dispositif de mesure à fibres optiques selon la revendication 3, caractérisé en ce qu'au moins les deux constantes de temps proviennent du choix du matériau de support.

11. Dispositif de mesure à fibres optiques selon une des revendications précédentes, caractérisé en ce qu'une source de lumière (1) délivre une énergie optique variant dans le temps.

12. Dispositif de mesure à fibres optiques selon la revendication 10, caractérisé en ce que l'énergie optique provenant de la source de lumière (1) est de forme impulsionnelle ou au moins sinusoïdale.

13. Dispositif de mesure à fibres optiques selon une des revendications précédentes, caractérisé en ce qu'au moins une partie de la lumière luminescente est modulable par la grandeur physique à mesurer, par réflexion, polarisation, interférence ou blindage.

14. Dispositif de mesure à fibres optiques selon une des revendications précédentes, caractérisé en ce que les corps luminescents (7, 8) ont la forme d'un guide optique plat ou cylindrique.

15. Dispositif de mesure à fibres optiques selon la revendication 12, caractérisé en ce que dans la partie électronique (19) des éléments sont présents pour mesurer la lumière luminescente ($I_1 \cdot e^{-t/\tau_1} + I_2 \cdot e^{-t/\tau_2}$) produite dans le capteur à des instants différents calculés à partir de la disparition de la lumière excitatrice.

16. Dispositif de mesure à fibres optiques selon la revendication 15, caractérisé en ce que ladite lumière luminescente est mesurée à deux instants différents et que le quotient entre les deux signaux ainsi obtenu du détecteur $S_d(t_1)$ et $S_d(t_2)$ est formé selon la formule

$$\frac{S_d(t_2) \cdot C}{S_d(t_1) - S_d(t_2) \cdot C}$$

dans laquelle C est une constante.

17. Dispositif de mesure à fibres optiques selon la revendication 15, caractérisé en ce que la lumière luminescente produite par le capteur

$$\sum_{i=1}^{n} I_i e^{-\frac{t}{\tau_1}}$$

est mesurée à un nombre d'instants qui est plus grand que le nombre de constantes de temps (n) avec lesquelles les parties différentes de lumière luminescente s'éteignent.

0 091 394

FIG. 1

FIG.3

FIG. 4

FIG. 5

9

FIG. 2a

FIG.2b